# FASCICULE DE BREVET EUROPEEN

(11) **EP 0 972 609 B1**
(45) Date de publication et mention de la délivrance du brevet: **19.02.2003**
(21) Numéro de dépôt: 99401659.0
(22) Date de dépôt: 02.07.1999
(51) Int. Cl.: B23Q 1/72

(54) **Système de maintien de pièce associé à une machine-outil**
Haltesystem für eine Werkzeugmaschine
Holding system for a machine tool

(30) Priorité: 03.07.1998 FR 9808566
(43) Date de publication de la demande: 19.01.2000
(73) Titulaire: AUTOMOBILES PEUGEOT, 75116 Paris (FR); AUTOMOBILES CITROEN, 92200 Neuilly-sur-Seine (FR); AEROSPATIALE SOCIETE NATIONALE INDUSTRIELLE, 75016 Paris (FR)
(72) Inventeur: Barra, Christian, 42170 Saint-Just-Saint Rambert (FR); Mirey, Jean-Claude, 80300 Treux (FR); Crosnier, Alexandre, 80300 Albert (FR)
(74) Mandataire: Bentz, Jean-Paul

(56) Documents cités:
- DE-A- 4 331 166
- FR-A- 2 377 868
- US-A- 5 345 984

## Description

La présente invention concerne un système de maintien de pièce, associé à une machine-outil et plus particulièrement à une machine destinée à l'usinage de cette pièce.

Une machine d'usinage comprend essentiellement un outil et un plateau rotatif, sur lequel la pièce à usiner est maintenue par des moyens appropriés. Le plateau entraîne la pièce en rotation par rapport à l'outil qui est fixe.

Lorsqu'il s'agit d'usiner des pièces allongées ou élancées suivant au moins un de leurs profils, l'usinage de ce type de pièce en un point éloigné de sa zone de fixation sur le plateau de la machine-outil demeure difficile. En effet, du fait de sa forme, cette pièce est relativement flexible et elle a tendance à vibrer ou à se plier lorsqu'un outil est en contact avec une zone de la pièce, éloignée du plateau.

C'est pourquoi, il a déjà été proposé un système de maintien de pièce comprenant un bras, fixé entre le plateau de la machine d'usinage et un support, et retenant respectivement la partie inférieure et la partie supérieure de la pièce à usiner.

Un tel système permet de maintenir la pièce à ses deux extrémités et de lui conférer une raideur suffisante pour permettre son usinage en un point éloigné de sa zone de fixation sur le plateau, et cela grâce au bras qui joue en quelque sorte le rôle d'un étai.

Il comporte cependant un inconvénient majeur. En effet, le bras tourne avec le plateau de la machine d'usinage et il gêne donc l'usinage de la pièce, lorsqu'il se trouve en regard de l'outil.

L'invention a pour but de pallier ces inconvénients en proposant un système de maintien de pièce permettant un usinage de la pièce en tout point, même éloigné de la zone de fixation de la pièce sur le plateau, ainsi que sur le pourtour entier de la pièce, sans être gêné par le bras.

L'invention concerne donc un système de maintien de pièce, associé à une machine-outil qui comprend un plateau sur lequel est montée ladite pièce et un outil pour l'usinage de ladite pièce, ledit plateau et ledit outil étant destinés à tourner librement l'un par rapport à l'autre, le système comprenant un bras pour maintenir ladite pièce à ses deux extrémités et étant caractérisé en ce que ledit bras et ledit plateau sont relativement mobiles en rotation.

De préférence, ledit bras est monté, par l'intermédiaire de roulements, sur le plateau et sur un élément de support retenant la partie supérieure de la pièce.

De préférence, ledit bras est maintenu sur la partie fixe de la machine, par l'intermédiaire d'au moins un dispositif anti-rotation.

Selon un mode particulier de réalisation, chaque dispositif anti-rotation est constitué par une pièce conique, fixée à la partie fixe de la machine-outil et coopérant avec un évidement correspondant dudit bras.

Ainsi, le bras et l'outil sont dans une position relative fixe. De façon préférée, ils sont opposés par rapport à l'axe de rotation du plateau de la machine.

De façon avantageuse, le système de maintien de pièce comprend un dispositif anti-rotation dudit bras par rapport au plateau de la machine-outil.

Selon un mode particulier de réalisation, ce dispositif anti-rotation est constitué par un évidement ménagé dans la partie inférieure dudit bras, dans lequel coulisse un ergot qui prend appui sur la partie fixe de la machine.

De préférence, la position du support supérieur de ladite pièce est réglable en hauteur.

Le système de maintien selon l'invention trouve particulièrement application dans le maintien de pièces élancées ou allongées qui doivent être usinées.

L'invention sera mieux comprise, et d'autres buts, avantages et caractéristiques de celle-ci apparaîtront plus clairement à la lecture de la description qui suit et qui est faite en référence aux dessins annexés, sur lesquels :

La figure 1 est une vue de côté d'un système de maintien de pièce selon l'état de la technique, associé à une machine d'usinage.

La figure 2 est une vue de côté d'un système de maintien de pièce selon l'invention, associé à une machine d'usinage.

La figure 3 est une vue en coupe selon III-III de la figure 2.

La figure 4 est une vue en coupe du détail A de la figure 2.

Les éléments communs aux différentes figures seront désignés par les mêmes repères.

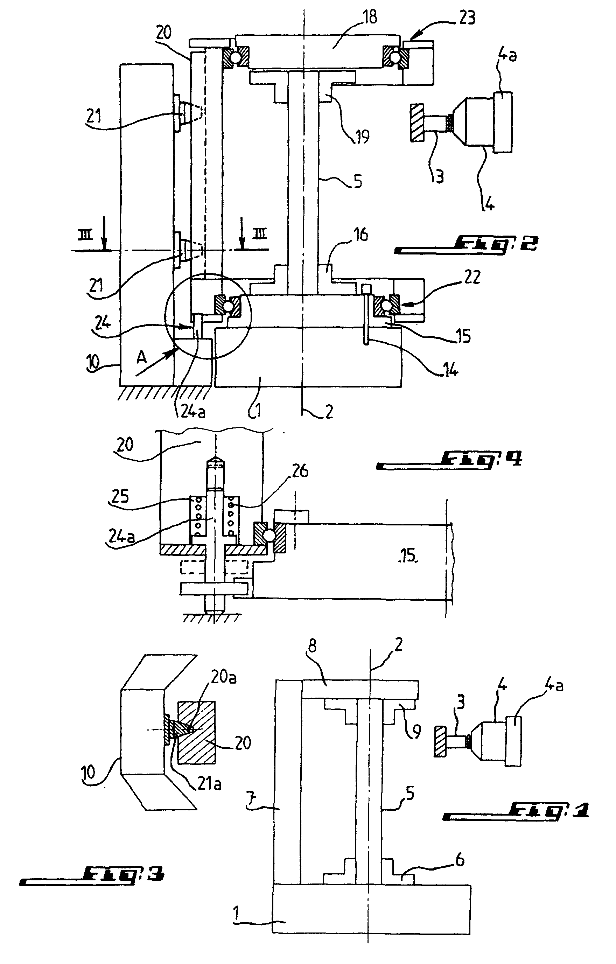

La figure 1 illustre de façon schématique une machine d'usinage qui comprend un plateau 1 qui est monté rotatif autour de l'axe 2, ainsi qu'un outil 3 qui est monté sur une broche 4 de la machine.

Le support 4a de la broche est fixé sur une partie fixe de la machine, le plateau 1 et l'outil 3 sont donc destinés à tourner l'un par rapport à l'autre.

La référence 5 désigne une pièce qui est destinée à être usinée par l'outil 3. C'est une pièce du type élancée, c'est-à-dire que sa hauteur est par exemple supérieure à deux fois sa base.

La pièce 5 est maintenue sur le plateau 1 par l'intermédiaire d'un moyen de fixation inférieur 6. La pièce 5 est sensiblement centrée sur l'axe de rotation 2 du plateau 1 de la machine d'usinage.

Le système de maintien de la pièce 5 conforme à l'état de la technique, comporte un bras 7 qui s'étend parallèlement à l'axe de rotation 2 du plateau de la machine.

Le bras 7 est relié à un élément de support 8 supérieur. Cet élément s'étend sensiblement perpendiculairement à l'axe 2.

La pièce 5 à usiner est reliée à l'élément de support 8 par l'intermédiaire d'un moyen de fixation supérieur 9.

Ainsi, grâce au système de maintien, la pièce 5 est maintenue non seulement à sa partie inférieure mais également à sa partie supérieure.

Ce système de maintien permet donc d'apporter de la raideur à la pièce élancée 5 et de permettre son usinage.

L'inconvénient de ce système est que le bras 7 est entraîné en rotation par le plateau 1. Ainsi, au cours de la rotation du plateau, le bras 7 vient s'interposer entre l'outil 3 et la pièce 5, ce qui empêche d'effectuer un usinage de la pièce sur tout son pourtour.

On se réfère maintenant à la figure 2 qui montre une machine d'usinage comprenant, comme celle illustrée à la figure 1, un plateau 1 monté en rotation autour de l'axe 2, ainsi qu'un outil 3 monté sur une broche 4. Le support 4a de la broche 4 est relié à une partie fixe de la machine.

La pièce élancée 5 est fixée au plateau 1 de la machine par l'intermédiaire du moyen de fixation 16. Ce moyen de fixation relie la pièce 5 à un élément de support inférieur 15 qui est lui-même fixé sur le plateau 1 par des moyens appropriés 14.

Le système de maintien de la pièce 5 selon l'invention comporte un bras 20 qui s'étend parallèlement à l'axe 2 de rotation du plateau 1 de la machine, la pièce 5 s'étendant également parallèlement à cet axe 2.

Le bras 20 est relié à une partie fixe 10 de la machine-outil, de telle sorte que le bras 20 et la partie fixe 10 restent dans une même position angulaire relative autour de l'axe 2.

A cet effet, le bras 20 est relié à la partie fixe 10, par au moins un dispositif anti-rotation 21.

De préférence, on prévoit deux dispositifs anti-rotation 21, écartés l'un de l'autre.

Comme l'illustre la figure 3, un dispositif anti-rotation 21 peut consister en une pièce conique 21a qui est fixée sur la partie fixe 10 de la machine, par l'intermédiaire de sa base, et dont la partie effilée vient s'engager dans un évidement 20a de forme correspondante, ménagé dans le bras 20.

Ainsi, l'évidement 20a s'étend dans une direction sensiblement perpendiculaire à l'axe 2.

Par ailleurs, la dimension de l'évidement 20a est choisie de telle sorte que l'élément conique 21a est monté sans jeu dans l'évidement 20a.

Comme le montrent les figures 2 et 3, l'évidement 20a est ménagé dans la partie arrière du bras 20, c'est-à-dire, la partie du bras qui n'est pas en regard de la pièce 5.

Le système de maintien de la pièce 5 selon l'invention comporte également un roulement inférieur 22, respectivement un roulement supérieur 23, par lesquels le bras 20 est monté sur l'élément de support inférieur 15, respectivement sur un élément de support supérieur 18.

Comme l'illustre la figure 2, la pièce 5 est retenue par l'élément de support supérieur 18, par un moyen de fixation 19. Un tel élément est classique et bien connu de l'homme du métier, il ne sera donc pas décrit en détail.

Ainsi, grâce aux roulements 22 et 23 et aux dispositifs anti-rotation 21, le bras 20 est relié à la partie fixe 10 de la machine, tandis que le plateau 1 peut tourner par rapport au bras 20.

Dans la mesure où l'outil 3 est également relié à une partie fixe de la machine, le bras 20 et l'outil 3 sont dans une position relative fixe et le plateau, ainsi que la pièce 5 qui est fixée sur lui, tournent par rapport au bras 20 et à l'outil 3. De façon plus générale, le plateau et la pièce, d'une part et le bras et l'outil, d'autre part, sont relativement mobiles en rotation.

Dans ces conditions, le système de maintien de la pièce 5 rend possible l'usinage de la pièce sur toutes ses faces, sans avoir besoin de démonter la pièce.

Par ailleurs, en choisissant de façon appropriée la position relative de l'outil 3 et du bras 20, le système de maintien de la pièce 5 selon l'invention permet également l'usinage de cette pièce sur tout son pourtour.

En particulier, on choisit de disposer le bras 20 et l'outil 3 de façon opposée par rapport à l'axe de rotation 2 du plateau 1. Ainsi, le bras 20 ne gêne pas l'accès de l'outil 3 à la pièce 5. Cependant, d'autres positions du bras 20 pourraient être retenues.

De préférence, le système de maintien de pièce selon l'invention comporte un dispositif anti-rotation 24 du bras 20 par rapport au plateau 1 de la machine d'usinage.

Comme l'illustre plus en détail la figure 4, ce dispositif anti-rotation comprend un ergot 24a qui peut coulisser de façon élastique dans un évidement 25 ménagé dans la partie inférieure du bras 20.

Des moyens élastiques 26 sont prévus dans l'évidement 25 pour maintenir l'ergot 24a dans la position illustrée en trait plein sur la figure 4, qui est alors en appui sur la partie fixe de la machine. Dans cette position, l'ergot 24a permet de fixer les positions angulaires relatives du bras 20 et du plateau 1.

Ce dispositif d'indexage permet de transporter l'outillage, tout en maintenant la position du bras 20 par rapport au plateau 1.

Un mouvement du plateau 1 et de l'ensemble de l'outillage, selon l'axe 2, permet de débloquer ou de bloquer le dispositif d'indexage 24. La position débloquée est illustrée en trait pointillé sur la figure 4.

Un tel dispositif d'indexage est classique et bien connu de l'homme du métier. Des dispositifs d'indexage différents de celui décrit ci-dessus pourraient également être utilisés.

Par ailleurs, la position de l'élément de support supérieur 18 est réglable selon l'axe 2. Ceci permet d'adapter le système de maintien de pièce selon l'invention à des pièces de hauteurs différentes.

Les signes de référence insérés après les caractéristiques techniques figurant dans les revendications ont pour seul but de faciliter la compréhension de ces dernières et ne sauraient en limiter la portée.

## Revendications

1. Système de maintien d'une pièce, associé à une machine-outil qui comprend un plateau (1) sur lequel est montée ladite pièce (5) et un outil (3) pour l'usinage de ladite pièce, ledit plateau (1) et ledit outil (3) étant destinés à tourner librement l'un par rapport à l'autre, le système de maintien comprenant un bras (20) pour maintenir ladite pièce (5) à ses deux extrémités, et étant **caractérisé en ce que** ledit bras (20) et ledit plateau (1) sont relativement mobiles en rotation.

2. Système de maintien de pièce selon la revendication 1, **caractérisé en ce que** ledit bras (20) est monté, par l'intermédiaire de roulements (22, 23), sur ledit plateau (1) et sur un élément de support (18), retenant la partie supérieure de la pièce (5).

3. Système de maintien de pièce selon la revendication 1 ou 2, **caractérisé en ce que** ledit bras (20) est maintenu sur une partie fixe (10) de la machine-outil par l'intermédiaire d'au moins un dispositif anti-rotation (21).

4. Système de maintien de pièce selon la revendication 3, **caractérisé en ce que** chaque dispositif anti-rotation (21) est constitué par une pièce conique (21a) fixée à ladite partie fixe (10) de la machine-outil et coopérant avec un évidement (20a) correspondant dudit bras (20).

5. Système de maintien de pièce selon l'une des revendications 1 à 4, **caractérisé en ce que** ledit bras (20) et ledit outil (3) sont dans une position relative fixe, et sont opposés par rapport à l'axe de rotation (2) du plateau (1) de la machine.

6. Système de maintien de pièce selon l'une des revendications 1 à 5, **caractérisé en ce qu'**il comprend en outre un dispositif anti-rotation (24) du bras (20) par rapport au plateau (1) de la machine-outil.

7. Système de maintien de pièce selon la revendication 6, **caractérisé en ce que** ledit dispositif anti-rotation est constitué par un évidement (25) ménagé dans la partie inférieure dudit bras (20), dans lequel coulisse un ergot (24a), prenant appui sur la partie fixe (10) de la machine.

8. Système de maintien de pièce selon l'une des revendications 2 à 7, **caractérisé en ce que** la position de l'élément de support supérieur (18) de ladite pièce (5) est réglable en hauteur.

9. Application du système de maintien selon l'une des revendications 1 à 8 à des pièces élancées ou allongées.

## Patentansprüche

1. Einrichtung zum Halten eines Teils, die einer Werkzeugmaschine zugeordnet ist, welche eine Platte (1) enthält, auf der das genannte Teil (5) angebracht ist, und ein Werkzeug (3) zum Bearbeiten des genannten Teils umfasst, wobei die genannte Platte (1) und das genannte Werkzeug (3) dazu bestimmt sind, sich frei zueinander zu drehen, wobei die Halteeinrichtung einen Arm (20) zum Halten des genannten Teils (5) an dessen beiden Enden enthält und **dadurch gekennzeichnet ist, dass** der genannte Arm (20) und die genannte Platte (1) zueinander drehbeweglich sind.

2. Einrichtung zum Halten eines Teils nach Anspruch 1, **dadurch gekennzeichnet, dass** der genannte Arm (20) mittels Rollen (22, 23) an der genannten Platte (1) und an einem Tragelement (18) gelagert ist, das den oberen Bereich des Teils (5) festhält.

3. Einrichtung zum Halten eines Teils nach Anspruch 1 oder 2, **dadurch gekennzeichnet, dass** der genannte Arm (20) mittels zumindest einer Drehblockiervorrichtung (21) an einem festen Bereich (10) der Werkzeugmaschine gehalten wird.

4. Einrichtung zum Halten eines Teils nach Anspruch 3, **dadurch gekennzeichnet, dass** jede Drehblockiervorrichtung (21) aus einem konischen Teil (21a) besteht, das am genannten festen Bereich (10) der Werkzeugmaschine befestigt ist und mit einer entsprechenden Ausnehmung (20a) des Arms (20) zusammenwirkt.

5. Einrichtung zum Halten eines Teils nach einem der Ansprüche 1 bis 4, **dadurch gekennzeichnet, dass** der genannte Arm (20) und das genannte Werkzeug (3) sich in einer relativen festen Stellung befinden und bezüglich der Drehachse (2) der Platte (1) der Maschine einander gegenüberliegen.

6. Einrichtung zum Halten eines Teils nach einem der Ansprüche 1 bis 5, **dadurch gekennzeichnet, dass** sie ferner eine Vorrichtung (24) zum Blockieren einer Drehung des Arms (20) bezüglich der Platte (1) der Werkzeugmaschine enthält.

7. Einrichtung zum Halten eines Teils nach Anspruch 6, **dadurch gekennzeichnet, dass** die genannte Drehblockiervorrichtung aus einer Ausnehmung (25) besteht, die im unteren Bereich des genannten Arms (20) ausgeführt ist, in der ein Vorsprung (24a) gleitet, der am festen Bereich (10) der Maschine abgestützt ist.

8. Einrichtung zum Halten eines Teils nach einem der Ansprüche 2 bis 7, **dadurch gekennzeichnet, dass** die Stellung des oberen Tragelements (18) des genannten Teils (5) höhenverstellbar ist.

9. Verwendung der Halteeinrichtung nach einem der Ansprüche 1 bis 8 bei schlanken bzw. länglichen Teilen.

## Claims

1. System for holding a workpiece, associated with a machine tool which comprises a bed (1) on which the said workpiece (5) is mounted and a tool (3) for machining the said workpiece, the said bed (1) and the said tool (3) being intended to rotate freely with respect to one another, the holding system comprising an arm (20) for holding the said workpiece (5) at its two ends, and being **characterized in that** the said arm (20) and the said bed (1) can move relative to one another in rotation.

2. System for holding a workpiece according to Claim 1, **characterized in that** the said arm (20) is mounted, via rolling bearings (22, 23), on the said bed (1) and on a support element (18) that retains the upper part of the workpiece (5).

3. System for holding a workpiece according to Claim 1 or 2, **characterized in that** the said arm (20) is held on a fixed part (10) of the machine tool via at least one rotation-preventing device (21).

4. System for holding a workpiece according to Claim 3, **characterized in that** each rotation-preventing device (21) consists of a conical piece (21a) fixed to the said fixed part (10) of the machine tool and collaborating with a corresponding recess (20a) of the said arm (20).

5. System for holding a workpiece according to one of Claims 1 to 4, **characterized in that** the said arm (20) and the said tool (3) are in a fixed relative position and are opposed to each other with respect to the axis of rotation (2) of the bed (1) of the machine.

6. System for holding a workpiece according to one of Claims 1 to 5, **characterized in that** it further comprises a device (24) preventing the arm (20) from rotating with respect to the bed (1) of the machine tool.

7. System for holding a workpiece according to Claim 6, **characterized in that** the said rotation-preventing device consists of a recess (25) made in the lower part of the said arm (20) in which there slides a stud (24a) resting against the fixed part (10) of the machine.

8. System for holding a workpiece according to one of Claims 2 to 7, **characterized in that** the position of the upper support element (18) for supporting the said workpiece (5) is height-adjustable.

9. Application of the holding system according to one of Claims 1 to 8 to slender or elongate workpieces.
